# EUROPEAN PATENT SPECIFICATION

(11) **EP 1 947 374 B1**
(45) Date of publication and mention of the grant of the patent: **28.10.2009**
(21) Application number: 08100602.5
(22) Date of filing: 17.01.2008
(51) Int. Cl.: F16L 3/22

(54) **Supporting device, particularly for machine hydraulic circuit pipes or similar**
Stützvorrichtung, insbesondere für Röhren in hydraulischen Kreislaufleitungen für Maschinen oder Ähnlichem
Dispositif de support, en particulier pour tuyaux de circuit hydraulique de machine ou similaires

(30) Priority: 19.01.2007 IT TO20070032
(43) Date of publication of application: 23.07.2008
(73) Proprietor: New Holland Kobelco Construction Machinery S.p.A., 10099 San Mauro Torinese (TO) (IT)
(72) Inventor: Viretto, Mauro, 10090 Trana (IT)
(74) Representative: CNH IP Department

(56) References cited:
- EP-A- 1 180 838
- DE-U- 1 993 975
- FR-A- 2 169 179
- JP-A- 2000 026 086

## Description

The present invention relates to a supporting device, particularly for machine hydraulic circuit pipes or similar.

Machines in general comprise a number of hydraulic actuators connected to respective hydraulic control circuits, the pipes of which are connected firmly to various portions of the machine by means of one or more supporting devices. Each supporting device comprises a retaining portion, to which a portion of the pipe is fitted; and a connecting portion fixed firmly to the machine by two screws.

Though widely used, by being efficient and reliable, known supporting devices of the type described above are unsatisfactory, mainly by failing to allow troublefree connection of additional pipes to the same points as existing pipes, without altering the original position of the existing pipes. Maintaining the original position of existing pipes is essential to avoid damaging them, and, above all, because of the confined spaces in which the existing pipes are normally located, and which can normally only be reached one-handedly by the fitter. As a result, restoring the existing pipes to their original position is an extremely awkward, time-consuming job, which therefore involves considerable cost in terms of labour.

It is an object of the present invention to provide a supporting device designed to provide a straightforward, low-cost solution to the above drawbacks, and which, in particular, provides for fast connection of additional pipes to the same point as existing pipes, without altering the original position of the existing pipes.

According to a first aspect of the present invention, there is provided a supporting device according to claim 1. The hook-on portion loosely engages said rod, and conveniently has an axial shoulder against which said hook-on portion rests.

Moreover, at least one of said rods preferably has a tightening portion for tightening said second connecting means to said attachment body.

According to another aspect of the present invention, a method according to claim 9 is provided.

A non-limiting embodiment of the invention will be described by way of example with reference to the accompanying drawings, in which:
Figure 1 shows a view in perspective of a preferred embodiment of the supporting device in accordance with the teachings of the present invention, as fitted to a supporting wall;
Figure 2 shows a view in perspective of a detail in Figure 1; and
Figures 3a-3f show, schematically and with parts removed for clarity, various stages in the assembly of the Figure 1 device.

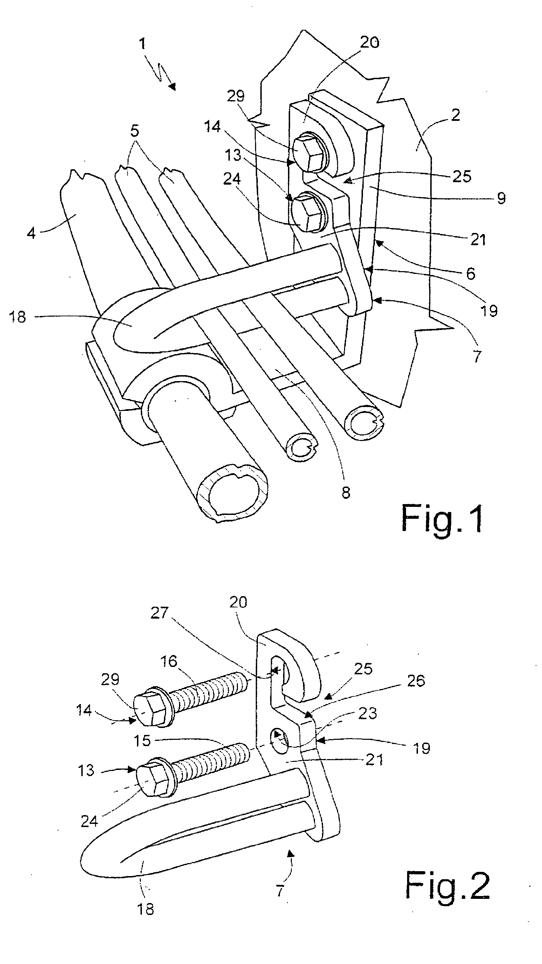

Number 1 in Figure 1 indicates as a whole a supporting device for supporting hydraulic pipes of a machine (not shown), in particular an earth-moving machine. More specifically, device 1 provides for connecting two or more separate hydraulic pipes 4, 5 to the same point on a wall 2 of the machine, and, in particular, for connecting pipes 5 after pipe 4, with substantially no alteration in the original position of pipe 4.

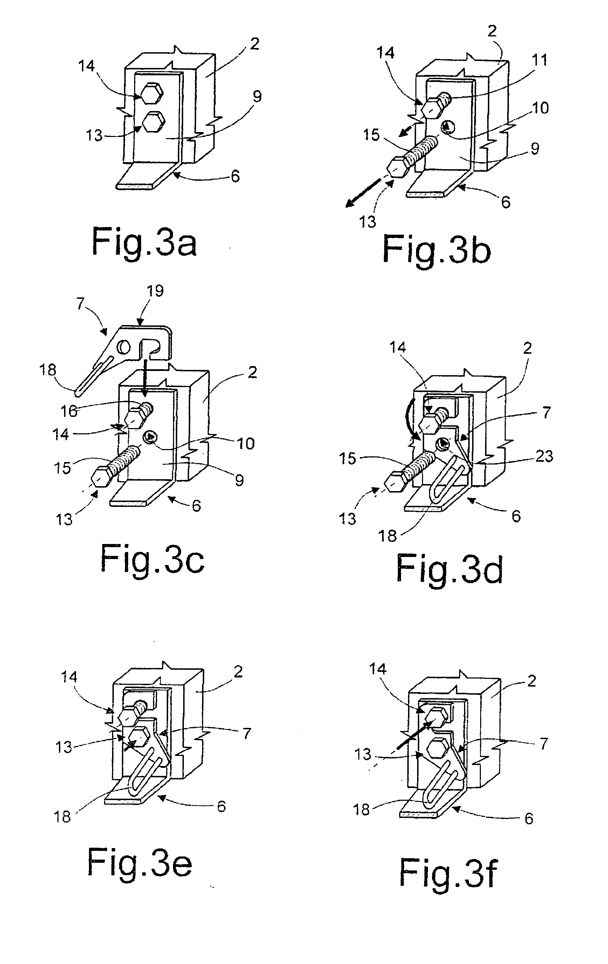

Accordingly, device 1 comprises two supports 6 and 7 for pipes 4 and 5 respectively. Support 6 comprises a known supporting and retaining portion 8 to which an intermediate portion of pipe 4 is fitted; and a connecting plate 9 perpendicular to retaining portion 8 and having two through holes 10 and 11 (Figure 3b). Plate 9 is connected to wall 2 by two parallel, transversely spaced screws 13 and 14, which project from wall 2, and have respective threaded rods 15, 16 extending through respective holes 10, 11 and screwed into respective threaded holes in wall 2.

Support 7 comprises an annular retaining portion 18 fitted through with pipes 5 and welded to a connecting plate 19 superimposed on and contacting plate 9. Alternatively, in a variation not shown, the annular portion has an opening allowing insertion of pipes 5 into the annular portion, but preventing withdrawal of pipes 5 from the annular portion when support 7 is in the work position. In the example described, connecting plate 19 comprises a top hook-on portion 20; and a bottom portion 21 welded to annular portion 18 and having a through hole 23 fitted through loosely with rod 15 of screw 13, the head 24 of which fastens plate 9 and plate 19 to each other and to wall 2.

As shown in Figures 1 and 2, top hook-on portion 20 and the plate-like bottom portion 21 define an L-shaped slot 25, which has an outwardly-open inlet portion 26 extending perpendicular to rods 15 and 16, and a dead end portion 27 extending in a direction intersecting both the axes of rods 15, 16. Slot 25 is engaged loosely by rod 16 of screw 14, the head 29 of which forces hook-on portion 20 against plate 9, and connects both to wall 2.

Device 1 is fitted to the machine as follows. With reference to Figures 3, plate 9 is first connected to wall 2 by inserting rods 15 and 16 through holes 10 and 11 and screwing screws 13 and 14 inside the respective threaded holes in wall 2 (Figure 3a); after which, pipe 4 is positioned in the work position and connected to retaining portion 8. When it becomes necessary to also connect pipes 5 to wall 2, screw 13 is removed, and screw 14 loosened (Figure 3b) to form a gap greater than the thickness of hook-on portion 20 between plate 9 and head 29 of screw 14; portion 20 is hooked onto rod 16 of screw 14 (Figure 3c) and rotated with respect to rod 16 to align hole 23 with hole 10 in plate 9 and with the threaded hole in wall 2 (Figure 3d); screw 13 is inserted and tightened to fasten portion 21 to plate 9 and both to wall 2 (Figure 3e); and screw 14 is tightened to fasten hook-on portion 20 to plate 9 (Figure 3f), thus connecting both supports 6 and 7 firmly to wall 2. Once the supports are connected, pipes 5 are fitted to support 7. Substantially the same operations are performed in the event pipes 5 are connected beforehand to support 7.

Device 1 as described therefore provides for connecting one or both of supports 6, 7 to the same point, and, in the latter case, for connecting support 7 without altering the position of support 6 and, hence, of relative pipe 4.

This is substantially due to using one of the screws to retain support 6 and, at the same time, hook on support 7. The hook-on portion of support 7 allows fast, easy connection of the support, even in confined spaces, by virtue of the support being connectable, and screws 13, 14 being unscrewable and screwable, one-handedly.

Finally, the shape of slot 25, i.e. comprising a straight inlet portion perpendicular to a dead retaining portion, on the one hand provides for easy insertion of rod 16 inside the slot to initially attach support 7, and, on the other, makes the fitter's job easier by retaining rod 16 inside slot 25, as support 7 is rotated about rod 16.

Clearly, changes may be made to device 1 as described herein without, however, departing from the protective scope as defined in the accompanying Claims. In particular, as opposed to being located on top of plate 9, hook-on portion 20 may be interposed between plate 9 and wall 2, on condition that moving support 6 along the rod does not affect pipe 4.

Also, device 1 may comprise more than two supports, as shown in the preferred embodiment described by way of example. In which case, the respective connecting plates or portions are arranged adjacent to one another or alternate in sequence, depending on the application, thus forming a multiple-support device, in which the number of supports is limited solely by the space available and the length of the screws.

Also, in device 1 as described, screws 13 and 14 may be replaced by at least partly threaded rods fitted with nuts. For less heavy-duty applications, at least one of the rods - the one to which the hook-on portions are attached - need not be threaded, and fastening may be achieved solely by the other threaded rod.

Finally, device 1 as described may be used for supporting elongated members other than those shown, e.g. wiring in general. Generally speaking, and particularly when supporting wiring, the retaining portions may be other than described, to adapt to different members for support.

## Claims

1. A supporting device (1) for supporting elongated members (4, 5), in particular, machine hydraulic circuit pipes, the device (1) comprising:
- first retaining means (8) for at least a first elongated member (4); and
- releasable first connecting means (9, 13, 14) for connecting said first retaining means (8) releasably to an attachment body (2); said first connecting means comprising two rods (15, 16), at least one of which is partly threaded; and
**characterized in that** said device (1) also comprises at least second retaining means (18) for at least a second elongated member (5), and at least second connecting means (19) for connecting said second retaining means to said rods (15, 16); said second connecting means (19) comprising a hook-on portion (20) which hooks onto one (16) of said rods.

2. A device (1) as claimed in claim 1, **characterized in that** said hook-on portion (20) loosely engages said one rod (16).

3. A device as claimed in claim 1 or 2, **characterized in that** said one rod (16) has an axial shoulder (29) against which said hook-on portion (20) rests.

4. A device (1) as claimed in any one of the foregoing claims, **characterized in that** at least one of said rods has a tightening portion (24, 29) for tightening said second connecting means (19) to said attachment body (2).

5. A device (1) as claimed in any one of the foregoing claims, **characterized in that** said second connecting means (19) are at least partly superimposed on, and at least partly contact, said first connecting means (9).

6. A device (1) as claimed in any one of the foregoing claims, **characterized in that** said rods (15, 16) project parallel to each other from said attachment body (2).

7. A device (1) as claimed in any one of the foregoing claims, **characterized in that** each of said rods (15, 16) has at least a threaded portion, and **in that** each has a forcing portion (24, 29) for forcing said first (9) and second (19) connecting means against said attachment body (2).

8. A device (1) as claimed in any one of the foregoing claims, **characterized in that** said second connecting means (19) comprise an L-shaped slot (25) partly bounded by said hook-on portion (20); said slot comprising a straight inlet portion (26) and a straight retaining portion (27).

9. A method for attaching supplementary elongated members (5) to a support (6) already carrying elongated members (4), the support (6) comprising
- first retaining means (8) for at least a first elongated member (4); and
- releasable first connecting means (9, 13, 14) for connecting said first retaining means (8) releasably to an attachment body (2); said first connecting means comprising two rods (15, 16), at least one of which is partly threaded and extending through said first retaining means into said attachment body;
**characterized in that** said method comprises the steps of
- removing said at least one partly threaded rod (15) from said first retaining means (8);
- hooking- on second retaining means (18) onto the other of said rods (16) for retaining a second elongated member (5); said second retaining means (18) comprising connecting means (19) with a hook-on portion (20);and
- re-inserting said at least one partly threaded rod (15) through said second and first retaining means (8, 18) for attachment to said attachment body (2).

10. A method according to claim 9, in which said rods (15, 16) form part of screws (13, 14) **characterized in that** said method comprises the further step of tightening said second connecting means (19) to said first connecting means (9) by said screws (15, 16).

11. A method according to claim 9 or 10, **characterized in that** said method comprises the further step of adding a second connecting plate (19) without altering the position of said first connecting means (9), they being a first connecting plate (9).

## Patentansprüche

1. Eine Halterungsvorrichtung (1) zum Haltern langgestreckter Teile (4, 5), insbesondere von Rohren von Hydraulik-Kreisen von Maschinen, wobei die Vorrichtung (1) Folgendes umfasst:
- eine erste Halteeinrichtung (8) für zumindest ein langgestrecktes Teil (4); und
- lösbare erste Verbindungselemente (9, 13, 14) zum Verbinden der ersten Halteeinrichtung (8) in lösbarer Weise mit einem Befestigungskörper (2), wobei die ersten Verbindungselemente zwei Stangen (15, 16) umfassen, von denen zumindest eine teilweise mit Gewinde versehen ist; und
**dadurch gekennzeichnet, dass** die Vorrichtung (1) weiterhin zumindest eine zweite Halteeinrichtung (18) für zumindest ein zweites langgestrecktes Teil (5) und zumindest zweite Verbindungselemente (19) zum Verbinden der zweiten Halteeinrichtung mit den Stangen (15, 16) umfasst, wobei die zweiten Verbindungselemente (19) einen Einhakteil (20) umfassen, der auf eine (16) der Stangen einhakt.

2. Vorrichtung (1) nach Anspruch 1, **dadurch gekennzeichnet, dass** der Einhakteil (20) lose mit einer Stange (16) in Eingriff kommt.

3. Vorrichtung nach Anspruch 1 oder 2, **dadurch gekennzeichnet, dass** die eine Stange (16) eine axiale Schulter (29) aufweist, gegen die der Einhakteil (20) anliegt.

4. Vorrichtung (1) nach einem der vorhergehenden Ansprüche, **dadurch gekennzeichnet, dass** zumindest eine der Stangen einen Festzieh-Abschnitt (24, 29) zum Festziehen des zweiten Verbindungselementes (19) an dem Befestigungskörper (2) aufweist.

5. Vorrichtung (1) nach einem der vorhergehenden Ansprüche, **dadurch gekennzeichnet, dass** die zweiten Verbindungselemente (19) zumindest teilweise über den ersten Verbindungselementen (9) liegen und zumindest teilweise in Kontakt mit diesen stehen.

6. Vorrichtung nach einem der vorhergehenden Ansprüche, **dadurch gekennzeichnet, dass** die Stangen (15, 16) parallel zueinander von dem Befestigungskörper (2) vorspringen.

7. Vorrichtung (1) nach einem der vorhergehenden Ansprüche, **dadurch gekennzeichnet, dass** jede der Stangen (15, 16) zumindest einen Gewindeabschnitt aufweist, und dass jede einen Druckabschnitt (24, 29) zum Drücken der ersten (9) und zweiten (19) Verbindungselemente gegen den Befestigungskörper (2) aufweist.

8. Vorrichtung (1) nach einem der vorhergehenden Ansprüche, **dadurch gekennzeichnet, dass** die zweiten Verbindungselemente (19) einen L-förmigen Schlitz (25) umfassen, der teilweise durch den Einhakteil (20) begrenzt ist, wobei der Schlitz einen geradlinigen Einlassabschnitt (26) und einen geradlinigen Halteabschnitt (27) umfasst.

9. Verfahren zum Anbringen zusätzlicher langgestreckter Teile (5) an einer Halterung (6), die bereits langgestreckte Teile (4) trägt, wobei die Halterung (6) Folgendes umfasst:
- eine erste Halteeinrichtung (8) für zumindest ein erstes langgestrecktes Teil (4); und
- lösbare erste Verbindungselemente (9, 13, 14) zum Verbinden der ersten Halteeinrichtung (8) in lösbarer Weise mit einem Befestigungskörper (2); wobei die ersten Verbindungselemente zwei Stangen (15, 16) umfassen, von denen zumindest eine teilweise mit Gewinde versehen ist und sich durch die ersten Halteeinrichtung in den Befestigungskörper erstreckt;
**dadurch gekennzeichnet, dass** das Verfahren die folgenden Schritte umfasst:
- Entfernen der zumindest einen teilweise mit Gewinde versehenen Stange (15) von der ersten Halteeinrichtung (8);
- Einhaken der zweiten Halteeinrichtung (18) auf die andere der Stangen (16) zum Festhalten eines zweiten langgestreckten Teils (5); wobei die zweite Halteeinrichtung (18) Verbindungselemente (19) mit einem Einhakteil (20) umfasst; und
erneutes Einsetzen der zumindest einen teilweise mit Gewinde versehenen Stange (15) durch die zweiten und ersten Halteeinrichtungen (8, 18) hindurch zur Befestigung an dem Befestigungskörper (2).

10. Verfahren nach Anspruch 9, bei dem die Stangen (15, 16) Teile von Schrauben (13, 14) bilden, **dadurch gekennzeichnet, dass** das Verfahren den weiteren Schritt des Festziehens der zweiten Verbindungselemente (19) gegen die ersten Verbindungselemente (9) durch die Schrauben (15, 16) umfasst.

11. Verfahren nach Anspruch 9 oder 10, **dadurch gekennzeichnet, dass** das Verfahren den weiteren Schritt des Hinzufügens einer zweiten Verbindungsplatte (19) ohne Änderung der Position der ersten Verbindungselemente (9), die eine erste Verbindungsplatte (9) sind, vorgesehen ist.

## Revendications

1. Dispositif de support (1) pour supporter des organes allongés (4, 5), en particulier, des tuyaux de circuit hydraulique de machine, le dispositif (1) comprenant :
- un premier moyen de retenue (8) pour au moins un premier organe allongé (4), et
- des premiers moyens d'assemblage (9, 13, 14) amovibles pour assembler ledit premier moyen de retenue (8) de manière amovible à un corps de fixation (2), les dits premiers moyens d'assemblage comprenant deux tiges (15, 16), au moins l'une d'entre elles étant en partie filetée, et
**caractérisé en ce que** ledit dispositif (1) comprend également au moins un second moyen de retenue (18) pour au moins un second organe allongé (5), et au moins des seconds moyens d'assemblage (19) pour assembler ledit second moyen de retenue aux dites tiges (15, 16), les dits seconds moyens d'assemblage (19) comprenant une portion d'accrochage (20) qui s'accroche sur l'une (16) des dites tiges.

2. Dispositif (1) selon la revendication 1 **caractérisé en ce que** ladite portion d'accrochage (20) engage librement ladite une tige (16).

3. Dispositif selon la revendication claim 1 ou 2, **caractérisé en ce que** ladite une tige (16) a une embase axiale (29) contre laquelle la portion d'accrochage (20) s'appuie.

4. Dispositif (1) selon l'une quelconque des revendications précédentes, **caractérisé en ce qu'**au moins l'une des dites tiges a une portion de serrage (24, 29) pour serrer lesdits seconds moyens d'assemblage (19) au dit corps de fixation (2).

5. Dispositif (1) selon l'une quelconque des revendications précédentes, **caractérisé en ce que** lesdits seconds moyens d'assemblage (19) sont superposés au moins en partie sur, et au moins en partie en contact avec les premiers moyens d'assemblage (9).

6. Dispositif (1) selon l'une quelconque des revendications précédentes, **caractérisé en ce que** les dites tiges (15, 16) font saillie parallèlement l'une à l'autre à partir du dit corps de fixation (2).

7. Dispositif (1) selon l'une quelconque des revendications précédentes, **caractérisé en ce que** chacune des dites tiges (15, 16) a au moins une portion filetée, et **en ce que** chacune a une portion de force (24, 29) pour forcer les dits premiers (9) et seconds (19) moyens d'assemblage contre ledit corps de fixation (2).

8. Dispositif (1) selon l'une quelconque des revendications précédentes, **caractérisé en ce que** lesdits seconds moyens d'assemblage (19) comprennent une encoche en forme de L (25) en partie limitée par ladite portion d'accrochage (20), ladite encoche comprenant une portion d'entrée droite (26) et une portion de retenue droite (27).

9. Procédé pour fixer des organes allongés supplémentaires (5) sur un support (6) portant déjà des organes allongés (4), le support (6) comprenant
- un premier moyen de retenue (8) pour au moins un premier organe allongé (4), et
- des premiers moyens d'assemblage (9, 13, 14) amovibles pour assembler ledit premier moyen de retenue (8) de manière amovible à un corps de fixation (2), lesdits premiers moyens d'assemblage comprenant deux tiges (15, 16), au moins l'une d'entre elles étant en partie filetée et s'étendant au travers du dit premier moyen de retenue dans ledit corps de fixation,
**caractérisé en ce que** ledit procédé comprend les étapes consistant à
- enlever ladite au moins une tige en partie filetée (15) du dit premier moyen de retenue (8),
- accrocher un second moyen de retenue (18) sur l'autre des dites tiges (16) pour retenir un second organe allongé (5), ledit second moyen de retenue (18) comprenant des moyens d'assemblage (19) avec une portion d'accrochage (20), et
- réinsérer ladite au moins une tige en partie filetée (15) au travers des dits second et premier moyens de retenue (8, 18) pour fixer au dit corps de fixation (2).

10. Procédé selon la revendication 9, dans lequel les dites tiges (15, 16) forment une partie de vis (13, 14), **caractérisé en ce que** ledit procédé comprend l'étape supplémentaire consistant à serrer les dits seconds moyens d'assemblage (19) contre les dits premiers moyens d'assemblage (9) par les dites vis (15, 16).

11. Procédé selon la revendication 9 ou 10, **caractérisé en ce que** ledit procédé comprend l'étape supplémentaire consistant à ajouter une seconde plaque d'assemblage (19) sans modifier la position des dits premiers moyens d'assemblage (9), ceux-ci étant une première plaque d'assemblage (9).
